# EUROPEAN PATENT APPLICATION

(11) **EP 2 006 690 A2**
(43) Date of publication of application: **24.12.2008**
(21) Application number: 07740675.9
(22) Date of filing: 30.03.2007
(51) Int. Cl.: G01N 35/02, G01N 21/03, G01N 21/11, G01N 21/13, G01N 21/15

(54) **REACTION CONTAINER, ANALYSIS DEVICE, AND ANALYSIS METHOD**

(30) Priority: 07.04.2006 JP 2006106471
(71) Applicant: Olympus Corporation, Tokyo 151-0072 (JP)
(72) Inventor: ISHII, Hidekazu, Tokyo 1510072 (JP)
(74) Representative: von Hellfeld, Axel
(86) International application number: PCT/JP2007/057239
(87) International publication number: WO 2007/116838

(57) **Abstract**

A reaction vessel whose horizontal sectional area can be narrowed without causing a problem of contamination, and an analyzer and a method of analysis to which the reaction vessel is applied are provided. The reaction vessel has a storage space 11 extending from a first end to a second end. When a reagent X and a specimen Y are dispensed from the first end by an amount smaller than a preset threshold, the reagent X and the specimen Y are retained in the storage space 11 by the effect of surface tension. When air is supplied from the first end, the reagent X and the specimen Y are discharged to an outside from the second end.

## Description

### TECHNICAL FIELD

The present invention relates to a reaction vessel for producing a reaction liquid from a specimen and a reagent dispensed, and an analyzer and a method of analysis to which the reaction vessel is applied.

### BACKGROUND ART

Biochemical blood analyzers analyze a reaction liquid by dispensing a reagent and a specimen such as a serum to an inside of a reaction vessel thereby to produce the reaction liquid, and optically measuring the reaction liquid, for example. The reaction vessel applied is a bottomed cylindrical vessel. The analyzer of this type is configured so that the reaction vessel is washed after the analysis and reused repeatedly. After the analysis, the reaction liquid is sucked out from the reaction vessel by a suction nozzle. The inside of the reaction vessel is further washed with a washing liquid. Then, a new specimen and a new reagent are dispensed into the reaction vessel for next analysis.

When the reaction vessel is repeatedly reused, contamination can pose a problem. If a specimen and a reagent used in a previous analysis, or a drop of water poured during washing is left in the reaction vessel, such a residue can affect a result of next analysis significantly. To prevent the specimen and the reagent used in the previous analysis or a drop of washing liquid from remaining in the reaction vessel, various techniques have conventionally been employed. For example, the reaction vessel is made from polyolefin resin or an inner surface of the reaction vessel is coated with polyolefin resin so that moisture would not adhere to and remain on the inner surface of the reaction vessel (see, for example, Patent Document 1).

Patent Document 1: Japanese Patent Application Laid-Open No. H6-323986

### DISCLOSURE OF INVENTION

### PROBLEM TO BE SOLVED BY THE INVENTION

Meanwhile, a demand for an analysis with a minute amount of specimen is increasing. If the analysis can be performed with a minute amount of specimen, a physical burden on an examinee can be alleviated and further an economic burden on the examinee can be reduced since the used reagent can be minimized. However, if the amount of specimen used in the analysis is simply reduced, a liquid column of reaction liquid may not have a predetermined height in the reaction vessel. Then, the optical measurement mentioned earlier, for example, is difficult to carry out. To eliminate such a problem in the analysis with a minute-amount specimen, a horizontal sectional area of the reaction vessel may be narrowed so that the liquid column of the reaction liquid surely has a predetermined height.

However, if the horizontal sectional area is narrowed, it is difficult to insert a suction nozzle to the bottom of the reaction vessel. Then, the suction by the suction nozzle may become insufficient and the reaction liquid and the washing liquid may remain inside the reaction vessel after the analysis and the washing, even when the reaction vessel is made from polyolefin resin or the inner surface of the reaction vessel is coated with polyolefin resin. Such a situation can cause the problem of contamination.

In view of the above, an object of the present invention is to provide a reaction vessel whose horizontal sectional area can be narrowed without causing the problem of contamination, an analyzer and a method of analysis to which the reaction vessel is applied.

### MEANS FOR SOLVING PROBLEM

To achieve an object as described above, a reaction vessel according to the present invention includes a storage space extending from a first end to a second end, and the reaction vessel is configured to retain at least one of a reagent and a specimen in the storage space when the at least one of the reagent and the specimen is dispensed from the first end, and to discharge the at least one of the reagent and the specimen outside the storage space from the second end when a discharge operation is performed from outside.

Further, in the reaction vessel according to the present invention, in an aspect of the present invention as described above, the storage space is configured to retain by an effect of surface tension the at least one of the reagent and the specimen dispensed from the first end when an amount of the at least one of the reagent and the specimen is smaller than a preset threshold.

Further, the reaction vessel according to the present invention, in an aspect of the present invention as described above, further includes a sealing member that is detachably arranged at the second end of the storage space to hermetically seal an end of the storage space, and dispensing of the at least one of the reagent and the specimen is performed from the first end while the sealing member is attached, and the discharge operation is performed while the sealing member is removed.

Further, in the reaction vessel according to the present invention, in an aspect of the present invention as described above, an inner surface of the reaction vessel is subjected to a hydrophilicity treatment.

Further, an analyzer according to the present invention performs an analysis of a specimen using the reaction vessel according to the present invention as described above.

Further, a method of analysis according to the present invention includes applying the reaction vessel according to the present invention as described above, producing a reaction liquid in the reaction vessel by a reagent and a specimen dispensed from a first end of the reaction vessel, and performing a discharge operation from an outside after an analysis to discharge the reaction liquid outside the reaction vessel from a second end of the reaction vessel.

Further, in the method of analysis according to the present invention in an aspect of the present invention as described above, the reaction liquid after the analysis is discharged by and together with a fluid supplied from the first end of the reaction vessel.

Further, in the method of analysis according to the present invention in an aspect of the present invention as described above, the reaction liquid after the analysis is discharged by a pointed body inserted into the reaction vessel from the second end

Further, in the method of analysis according to the present invention in an aspect of the present invention as described above, the reaction liquid after the analysis is discharged by an absorber inserted into the reaction vessel from the second end.

### EFFECT OF THE INVENTION

According to the present invention, the reagent, the specimen, or both are discharged outside the reaction vessel by the discharge operation performed outside and a suction nozzle is not inserted from one end of the reaction vessel. Therefore, even when the horizontal sectional area of the reaction vessel is narrowed, the reaction liquid and the washing liquid are prevented from remaining in the reaction vessel after the analysis and the washing, whereby the problem of contamination would not arise. As a result, the analysis can be performed with a minute amount of specimen, and the physical and economic burden on the examinee can be alleviated.

### BRIEF DESCRIPTION OF DRAWINGS

FIG. 1 is a conceptual perspective view of a reaction vessel according to one embodiment of the present invention;
FIG. 2 is a conceptual diagram of an analyzer to which the reaction vessel shown in FIG. 1 is applied;
FIG. 3 is a conceptual diagram of analysis steps performed in the analyzer shown in FIG. 2;
FIG. 4 is a sectional side view of the reaction vessel shown in FIG. 1 to which a first example of a discharge operation is performed;
FIG. 5 is a sectional side view of the reaction vessel shown in FIG. 1 to which a second example of the discharge operation is performed; and
FIG. 6 is a sectional side view of the reaction vessel shown in FIG. 1 used in another manner.

### EXPLANATIONS OF LETTERS OR NUMERALS

- 10: Reaction vessel
- 11: Storage space
- 12: Reagent-dispensing nozzle
- 13: Specimen-dispensing nozzle
- 12a, 13a: Nozzle body
- 12b, 13b: Nozzle tip
- 12c, 13c: Nozzle arm
- 12d, 13d: Supporting rod
- 14: Reagent vessel
- 15: Specimen vessel
- 16, 17: Optical-system component
- 18: Air supply nozzle
- 19: Washing liquid supply nozzle
- 18a, 19a: Nozzle tip
- 20: Washing plate
- 30: Pointed body
- 35: Absorber
- 40: Sealing member
- C: Discharge/washing area
- D: Transporter
- S: Washing liquid
- X: Reagent
- Y: Specimen
- Z: Reaction liquid

### BEST MODE(S) FOR CARRYING OUT THE INVENTION

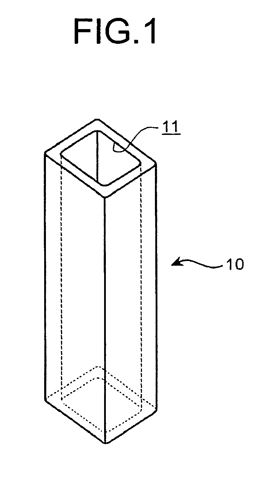

Exemplary embodiments of the present invention are described in detail below with reference to the accompanying drawings. FIG. 1 is a diagram of a reaction vessel according to one embodiment of the present invention. A reaction vessel 10 described below serves to produce a reaction liquid Z from a reagent X and a specimen Y dispensed into an analyzer, and the reaction vessel 10 is formed in a cylindrical shape with a storage space 11 in the center. To describe in more detail, a horizontal section of the reaction vessel 10 is square uniformly over its entire length. A horizontal section of the storage space 11 is also square uniformly over its entire length. Four sides of the storage space 11 are of the same thickness. The reaction vessel 10 is thus formed like a rectangular cylinder. Two ends of the reaction vessel 10 are open so that the storage space 11 is communicated with an outside.

The reaction vessel 10 can be made of any material such as glass and synthetic resin, as far as the material has a sufficient rigidity to preserve the shape and is translucent. Preferably, however, the reaction vessel 10 is configured in such a manner that at least the inner surface of the storage space 11 has hydrophilicity. To configure the inner surface of the storage space 11 with hydrophilicity, the entire reaction vessel 10 may be made of a hydrophilic material, or the inner surface of the storage space 11 is subjected to a hydrophilic treatment after the reaction vessel 10 is shaped from any material.

The dimension of the storage space 11 is set so that, when the reaction vessel 10 is arranged in a vertical direction, the reagent X, the specimen Y, or both dispensed into the reaction vessel 10 remain inside the storage space 11 by the effect of surface tension. For example, when the dispensed specimen Y is serum, the dispensed reagent X is a necessary reagent for the analysis of the serum, and a condition is set so that the total amount of dispensed serum and reagent is equal to or less than 30 microliters, the storage space 11 is shaped to have a square horizontal section 3 mm or less on a side. The dimension of the storage space 11 is suitably changed depending on the reagent X and the specimen Y to be dispensed, and the material of the reaction vessel 10, and the above condition is not limiting.

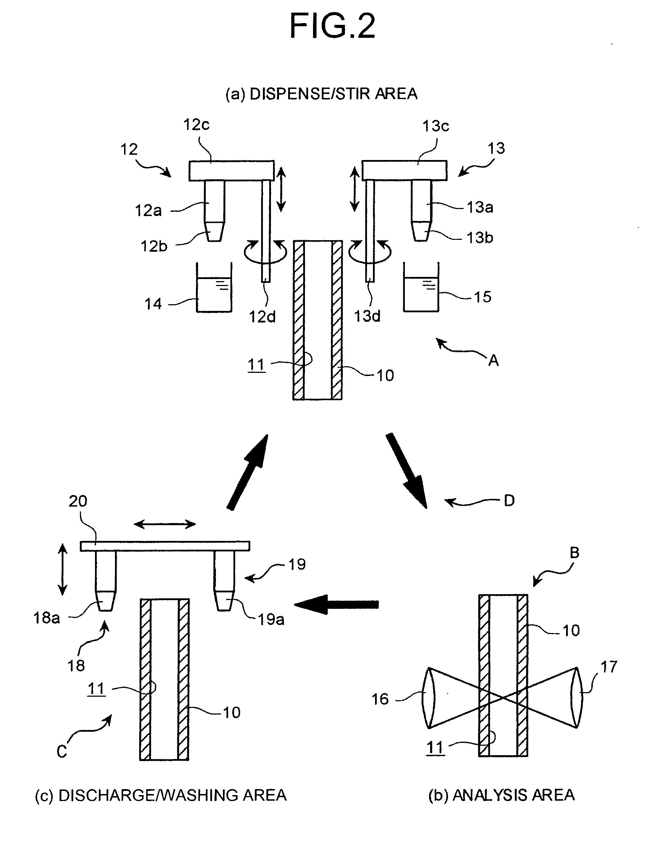

The analyzer which performs analysis using the reaction vessel 10 includes a dispense/stir area A, an analysis area B, and a washing area C, and further includes a transporter D for transporting the reaction vessel 10 among these areas as shown in FIG. 2.

The dispense/stir area A is an area for dispensing the reagent X and the specimen Y into the storage space 11 of the reaction vessel 10 arranged at a predetermined dispense position to produce the reaction liquid Z, and a reagent-dispensing nozzle 12 and a specimen-dispensing nozzle 13 are provided. The reagent-dispensing nozzle 12 and the specimen-dispensing nozzle 13 are respectively provided with nozzle bodies 12a and 13a, and nozzle tips 12b and 13b. The reagent-dispensing nozzle 12 and the specimen-dispensing nozzle 13 are respectively supported by supporting rods 12d and 13d via nozzle arms 12c and 13c with the nozzle tips 12b and 13b directed vertically downward. The supporting rods 12d and 13d are rotatable around the rod centers which extend along the vertical direction and movable along up-down direction along the rod center as an actuator not shown is driven. The supporting rods 12d and 13d can swing the reagent-dispensing nozzle 12 and the specimen-dispensing nozzle 13 around the rod centers of the supporting rods 12d and 13d, respectively, and move the same along the up-down direction. The supporting rod 12d of the reagent-dispensing nozzle 12 is arranged at a position equidistant from the reaction vessel 10 arranged at the dispense position and a reagent vessel 14 reserving the reagent X. When the supporting rod 12d is suitably swung or moved up and down, the reagent X in the reagent vessel 14 can be dispensed into the storage space 11 of the reaction vessel 10. The supporting rod 13d of the specimen-dispensing nozzle 13 is arranged at a position equidistant from the reaction vessel 10 arranged at the dispense position and a specimen vessel 15 reserving the specimen Y. When the supporting rod 13d is suitably swung or moved up and down, the specimen Y in the specimen vessel 15 can be dispensed into the storage space 11 of the reaction vessel 10. Though not clearly shown, the nozzle tips 12b and 13b of the reagent-dispensing nozzle 12 and the specimen-dispensing nozzle 13 are configured in a hollow, tapered, square pyramid shape so that their dimension gradually decreases towards a tip end. Specifically, the sectional area of the tip end is a rectangle shorter than 3 mm on a side, and the sectional area of the proximal end is a rectangle longer than 3 mm on a side. The reagent-dispensing nozzle 12 and the specimen-dispensing nozzle 13 are configured so that each can be fitted into the reaction vessel 10 with their tip ends inserted in the storage space 11.

The analysis area B is an area for directing light to the reaction vessel 10 arranged at a predetermined photometric position from the side to analyze the reaction liquid Z based on transmitted light. The analysis area B is arranged next to the dispense/stir area A. In the analysis area B, optical-system components 16 and 17 are arranged corresponding to the reaction vessel 10 arranged at the photometric position. The optical-system components 16 and 17 serve to irradiate the reaction vessel 10 with light and to receive the light.

The discharge/washing area C is an area for washing the reaction vessel 10 after the photometric analysis finishes. The discharge/washing area C is arranged at a position adjacent to each of the dispense/stir area A and the analysis area B. In the discharge/washing area C, an air supply nozzle 18 and a washing liquid supply nozzle 19 are arranged. The air supply nozzle 18 serves to supply air to the storage space 11 of the reaction vessel 10 arranged at a predetermined washing position. A nozzle tip 18a of the air supply nozzle 18 is supported by a washing plate 20 with its end directed vertically downward. The washing liquid supply nozzle 19 serves to supply the washing liquid to the storage space 11 of the reaction vessel 10 arranged at the washing position. A nozzle tip 19a of the washing liquid supply nozzle 10 is supported by the washing plate 20 with its end directed vertically downward. The washing plate 20 is movable along the horizontal direction and the vertical direction as an actuator not shown is driven. When the washing plate 20 moves appropriately, one of the air supply nozzle 18 and the washing liquid supply nozzle 19 can be selectively inserted into the storage space 11 of the reaction vessel 10 arranged at the washing position. Though not clearly shown, the nozzle tips 18a and 19a of the air supply nozzle 18 and the washing liquid supply nozzle 19 are respectively configured in a hollow, tapered, square pyramid shape so that the dimension thereof gradually decreases towards a tip end, similarly to the reagent-dispensing nozzle 12 and the specimen-dispensing nozzle 13 mentioned above. The air supply nozzle 18 and the washing liquid supply nozzle 19 can be fitted to the reaction vessel 10 with their tip ends inserted in the storage space 11.

The transporter D serves to transport the reaction vessel 10 arranged along the vertical direction among the dispense position of the dispense/stir area A, the photometric position of the analysis area B, and the washing position of the discharge/washing area C sequentially and cyclically. The transport of the reaction vessel 10 is preferably not successive and is intermittent so that operation can be performed at each of the dispense position, the photometric position, and the washing position.

An analyzer having the configuration as described above can be realized by configuring the transporter D by arranging an analysis table, which can holds plural reaction vessels 10 in a circle around a predetermined center of axis, rotatably around the center of axis, for example, and arranging the dispense/stir area A, the analysis area B, and the discharge/washing area C around the analysis table in turn.

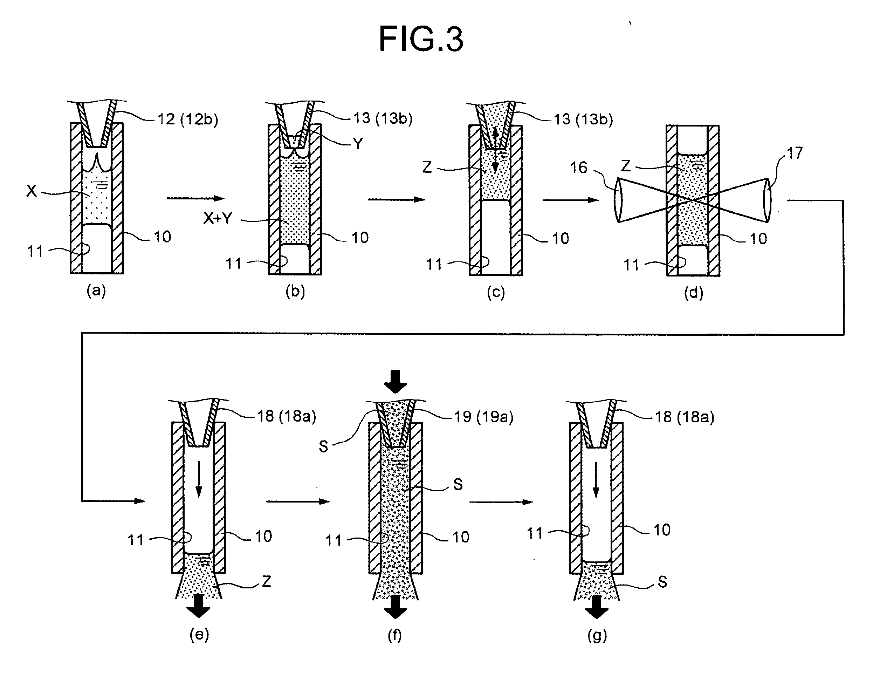

FIG. 3 shows analysis steps of the specimen Y performed by the analyzer in order. An effect of the analyzer is described below with reference to FIG. 3. At the same time, a method of analysis according to the present invention is described in detail.

In the analyzer, the reaction vessel 10 is arranged along the vertical direction at the dispense position as the transporter D is driven. The supporting rod 12d swings and moves up and down as appropriate to cause the reagent-dispensing nozzle 12 dispense a pre-set amount of the reagent X into the storage space 11 of the reaction vessel 10 from the top end of the reaction vessel 10 as shown in FIG. 3(a). Subsequently, the specimen-dispensing nozzle 13 dispenses a pre-set amount of the specimen Y into the storage space 11 of the reaction vessel 10 as shown in FIG. 3(b). The total amount of the reagent X and the specimen Y to be dispensed is set to be lower than 30 microliters. Therefore, the reagent X and the specimen Y dispensed into the reaction vessel 10 remain inside the storage space 11 by the effect of surface tension. Though the reaction vessel 10 is arranged along the vertical direction and the bottom end thereof is open, the reagent X and the specimen Y do not flow out of the reaction vessel 10 from the bottom end.

After the reagent X and the specimen Y are dispensed into the reaction vessel 10, suction and discharge are repeatedly performed by the specimen-dispensing nozzle 13 left fitted to the top end of the reaction vessel 10 as shown in FIG. 3(c). Thus, the reagent X and the specimen Y are stirred and the reaction liquid Z is produced in the storage space 11 of the reaction vessel 10.

After the reaction liquid Z is produced in the storage space 11, the reaction vessel 10 is transported to the photometric position as the transporter D is driven. When the reaction vessel 10 is arranged along the vertical direction at the photometric position, the reaction vessel 10 is irradiated with light from the side and the analysis of the reaction liquid Z is performed based on the transmitted light as shown in FIG. 3(d).

After the photometry, the reaction vessel 10 is transported to the washing position as the transporter D is driven. After the reaction vessel 10 is arranged along the vertical direction at the washing position, the washing plate 20 moves appropriately. The nozzle tip 18a of the air supply nozzle 18 comes to be fitted to the top end of the reaction vessel 10 as shown in FIG. 3(e). Supply of air to the storage space 11 continues for a while. As a result, the reaction liquid Z present in the storage space 11 of the reaction vessel 10 is discharged from the bottom end as if having been pushed out by the air.

Thereafter, the supply of air stops and the washing plate 20 moves appropriately. The nozzle tip 19a of the washing liquid supply nozzle 19 comes to be fitted to the top end of the reaction vessel 10 as shown in FIG. 3(f). Supply of the washing liquid S to the storage space 11 continues for a while. As a result, the washing liquid S washes the storage space 11 of the reaction vessel 10.

After the supply of the washing liquid S stops, the washing plate 20 moves appropriately. Then, the nozzle tip 18a of the air supply nozzle 18 comes to be fitted to the top end of the reaction vessel 10 as shown in FIG. 3(g). Again, the supply of air to the storage space 11 continues for a while. If necessary, the step of supplying the washing liquid S to the storage space 11 of the reaction vessel 10 and the step of supplying air thereto may be repeated plural times. As a result, the washing liquid S left in the storage space 11 of the reaction vessel 10 is pushed out from the bottom end by the air, and the washing liquid S and the reaction liquid Z are removed. Therefore, even when the reaction vessel 10 is transported to the dispense position by the driven transporter D afterwards, and the reagent X and the specimen Y are dispensed for the next analysis, no problem of contamination occurs.

In addition, because a suction unit such as the suction nozzle is not inserted into the storage space 11 and instead, the air and the washing liquid S are supplied to the reaction vessel 10 from the top end to discharge the reaction liquid Z after the analysis and the washing liquid S after the washing, the reaction liquid Z and the washing liquid S are prevented from remaining in the storage space 11 even when the horizontal section of the storage space 11 is narrowed. Therefore, the analysis can be carried out with a minute amount of specimen, and the physical and economic burden of the examinee can be alleviated. In addition, the analyzer can be downsized.

In the embodiment described above, the reaction vessel 10 with the rectangular cylindrical shape is described as an example. The reaction vessel 10 does not need to be rectangular cylindrical, and can be a circular cylindrical shape, for example. When the circular-cylindrical reaction vessel 10 is applied, preferably the nozzle tips 12b, 13b, 18a, and 19a of the reagent-dispensing nozzle 12, the specimen-dispensing nozzle 13, the air supply nozzle 18, and the washing liquid supply nozzle 19 in the analyzer are configured in a circular pyramid shape so as to be fitted to the reaction vessel 10 when inserted thereto.

In the embodiment described above, the reagent X is first dispensed into the storage space 11 of the reaction vessel 10 followed by the dispense of the specimen Y for the production of the reaction liquid Z. The order of dispensing is not limited by the above embodiment, and the specimen Y and the reagent X may be dispensed in this order, or dispensed simultaneously.

Further, in the embodiment described above, after being dispensed to the reaction vessel 10, the reagent X and the specimen Y are stirred through the repetitive suction and discharge by the dispensing nozzle (13). The reagent X and the specimen Y may be stirred through application of ultrasonic vibrations to the reaction vessel 10, for example.

Further, in the embodiment described above, air is supplied from the top end of the reaction vessel 10 to discharge the reaction liquid Z from the reaction vessel 10 after the photometry finishes. The discharge operation is not limited by the air supply. For example, the washing liquid S may be directly supplied to the reaction vessel 10 from the top end after the photometry finishes so that the reaction liquid Z is pushed out from the bottom end of the reaction vessel 10 together with the washing liquid S.

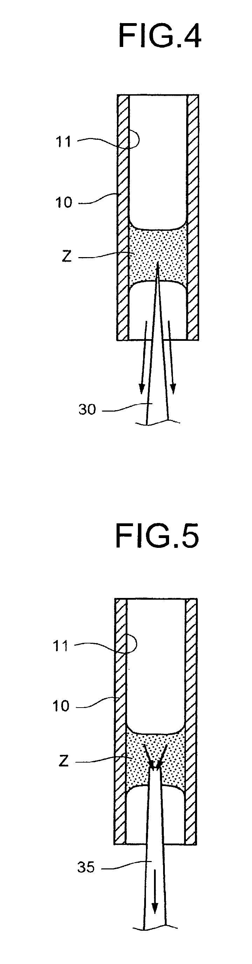

FIGS. 4 and 5 are diagrams of other examples of the discharge operation performed on the reaction vessel 10. In a first example shown in FIG. 4, a pointed body 30 is inserted into the reaction vessel 10 from the bottom end so that the tip end of the pointed body 30 touches the reaction liquid Z. When the tip end of the pointed body 30 touches the reaction liquid Z, the effect of the surface tension is lost, and the reaction liquid z is discharged along the external surface of the pointed body 30 through the bottom end of the reaction vessel 10. Any material can be used for the pointed body 30, though a material having hydrophilicity at least equal to the hydrophilicity of the inner surface of the storage space 11 is preferable. The dimension of an outer diameter of the pointed body 30 is preferably set smaller than the dimension of the inner diameter of the storage space 11 so that there is no interference between the pointed body 30 and the reaction vessel 10.

In a second example shown in FIG. 5, an absorber 35 is inserted into the reaction vessel 10 from the bottom end so that the tip end of the absorber 35 touches the reaction liquid Z. When the tip end of the absorber 35 touches the reaction liquid Z, the reaction liquid Z starts to be gradually absorbed into the absorber 35. The reaction liquid Z is discharged through the inside of the absorber 35 from the bottom end of the reaction vessel 10. The absorber 35 preferably has a good absorbability for the reaction liquid Z. For example, a sponge made of polyvinyl alcohol foam can be applied. The dimension of an outer diameter of the absorber 35 is preferably smaller than the dimension of the inner diameter of the storage space 11 similarly to the pointed body 30.

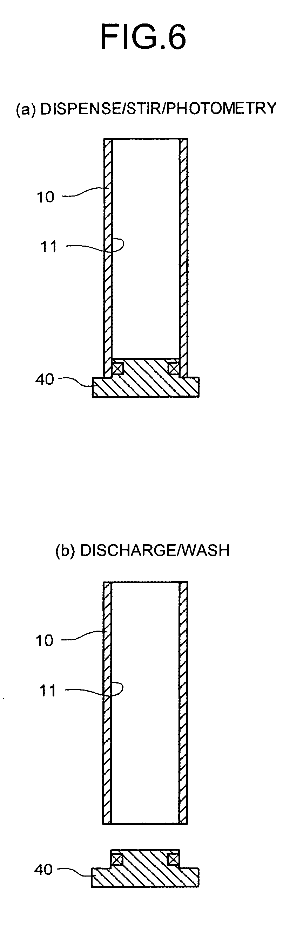

Further, in the embodiment described above, the reagent X and the specimen Y are retained in the storage space 11 by the effect of surface tension. It is not always necessary to utilize the effect of surface tension. For example, if the total amount of substances dispensed into the reaction vessel 10 of the embodiment exceeds 30 microliters, it is difficult to securely retain the substances inside the storage space 11 by the effect of surface tension. In this case, a sealing member 40 such as a packing may be detachably attached to the bottom end which is arranged at the lower position of the reaction vessel 10 as shown in FIG. 6, and the reagent X, the specimen Y, or both may be dispensed while the sealing member 40 is attached.

## Claims

1. A reaction vessel comprising:
a storage space extending from a first end to a second end, the reaction vessel being configured to retain at least one of a reagent and a specimen in the storage space when the at least one of the reagent and the specimen is dispensed from the first end, and to discharge the at least one of the reagent and the specimen outside the storage space from the second end when a discharge operation is performed from outside.

2. The reaction vessel according to claim 1, wherein
the storage space is configured to retain by an effect of surface tension the at least one of the reagent and the specimen dispensed from the first end when an amount of the at least one of the reagent and the specimen is smaller than a preset threshold.

3. The reaction vessel according to claim 1, further comprising
a sealing member that is detachably arranged at the second end of the storage space to hermetically seal an end of the storage space, and
dispensing of the at least one of the reagent and the specimen is performed from the first end while the sealing member is attached, and the discharge operation is performed while the sealing member is removed.

4. The reaction vessel according to claim 1, wherein
an inner surface of the reaction vessel is subjected to a hydrophilicity treatment.

5. An analyzer performing an analysis of a specimen using the reaction vessel according to any one of claims 1 to 4.

6. A method of analysis comprising:
applying the reaction vessel according to any one of claims 1 to 4;
producing a reaction liquid in the reaction vessel by a reagent and a specimen dispensed from a first end of the reaction vessel; and
performing a discharge operation from an outside after an analysis to discharge the reaction liquid outside the reaction vessel from a second end of the reaction vessel.

7. The method of analysis according to claim 6, wherein
the reaction liquid after the analysis is discharged by and together with a fluid supplied from the first end of the reaction vessel.

8. The method of analysis according to claim 6, wherein
the reaction liquid after the analysis is discharged by a pointed body inserted into the reaction vessel from the second end.

9. The method of analysis according to claim 6, wherein
the reaction liquid after the analysis is discharged by an absorber inserted into the reaction vessel from the second end.
